# EUROPEAN PATENT APPLICATION

(11) **EP 4 614 791 A1**
(43) Date of publication of application: **10.09.2025**
(21) Application number: 24382237.6
(22) Date of filing: 04.03.2024
(51) Int. Cl.: H02M 5/458, H02M 1/15, H02M 3/158, H02M 3/335, H02M 7/219, H02M 1/00

(54) **POWER CONVERTER SYSTEM INCORPORATING AN ACTIVE DC-LINK, AND METHOD FOR OPERATING THE POWER CONVERTER**

(71) Applicant: Ficosa Automotive, S.L.U., 08028 Barcelona (ES)
(72) Inventor: FERNÁNDEZ COMESAÑA, Pablo, 08232 Viladecavalls (Barcelona) (ES)
(74) Representative: Balder IP Law, S.L.

(57) **Abstract**

The invention refers to a power converter system (1) comprising: an input converter (3) adapted to provide an output signal, an output converter (4) adapted to convert a DC input signal into an AC or a DC output signal, and a DC bus connecting the output signal of the input converter (3) to the input signal of the output converter (4). The system (1) includes: an active DC-link (2) with two switching devices connected in series between first and second lines (L+, L-) of the DC bus, and a resonant tank connected in series between the interconnection between the two switching devices and the second line (L-). A controller operates the two switching devices, in a first mode of operation, in which the active DC-link (2) receives current from the input converter (3) to store energy in the resonant tank, and in a second mode of operation, in which the active DC-link (2) supplies energy stored in the resonant tank to the output converter (4).

## Description

### TECHNICAL FIELD

The present invention relates in general to power converters for feeding a load, for example for charging a battery.

An object of the invention is the provision of a power converter that operates with less components, in particular with a reduced number of electrolytic capacitors compared with conventional power converters, in order to reduce its size, manufacturing costs, and to extend its life span.

The use of the invention is especially advantageous in On-Board Battery Chargers for electric vehicles.

### STATE OF THE ART

Electric and hybrid vehicles are provided with a high-voltage battery for supplying power to a propulsion electric motor of the vehicle. These types of vehicles include an On-Board Battery Charger for controlling the process of charging the battery, which includes power converters to transform an alternating current (AC) from the mains, into a suitable direct current (DC) to charge the battery.

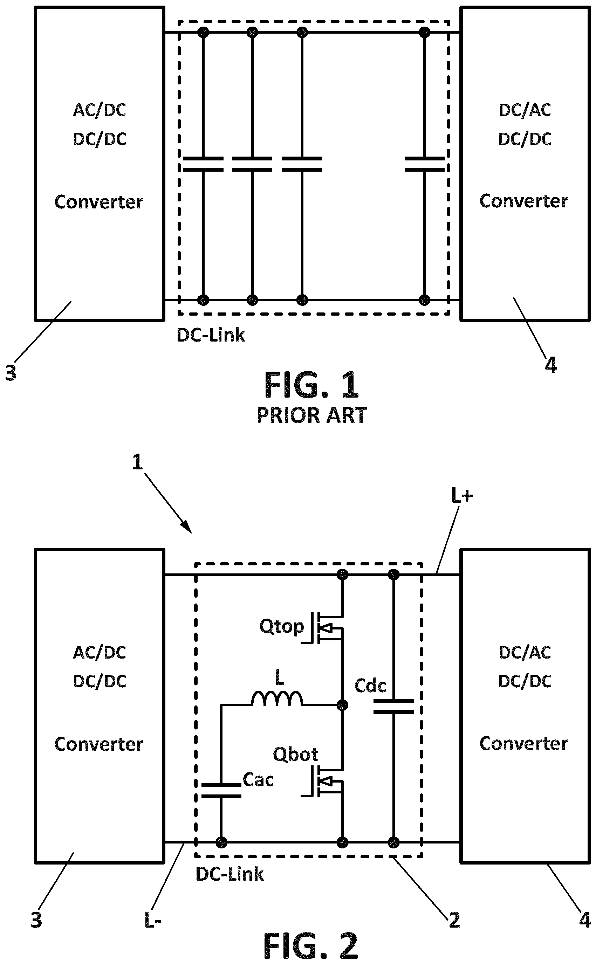

Conventionally and as represented in **Figure 1****,** these power converters are formed by: an AC/DC input converter (3) that converts an AC power from the mains into a DC output, an DC/DC output converter (4) which provides a DC output to charge the battery, and a passive DC-link which interconnect the AC/DC converter's output with the DC/DC converter's input.

Traditional DC links may be regarded as passive links, because they are formed by a large number of electrolytic capacitors that act as a filter, to absorb switching currents and reduce ripple voltage. However, it is known that electrolytic capacitors are bulky and have a limited life span. Additionally, the use of electrolytic capacitors reduces the power density and increases the manufacturing cost of the power converter.

Therefore, the provision of power converters that overcome the above-described shortcomings of the current technology, remains a challenge in this technical field.

### DESCRIPTION OF THE INVENTION

The invention is defined in the attached independent claims, and satisfactorily solves the above-described drawbacks of the prior art, by the provision of power converter incorporating an active DC-link instead of the traditional passive DC-link with a large number of capacitors, thereby reducing manufacturing costs and size of the power converter and extending its life span.

More specifically, an aspect of the invention refers to a power converter comprising: an input converter adapted to provide a DC output (which is a DC signal that commonly includes a ripple, that is an AC component on an DC level), an output converter adapted to convert a DC input into an AC or a DC output, and a DC bus having a first line and a second line connecting the output of the input converter to the input of the output converter, so as to conduct DC power from the input converter to the output converter. The first line may be a positive polarity line, and the second line may be a negative polarity line of the DC bus.

According to the invention, the power converter further comprises an active DC-link formed by: two semiconductor switching devices, namely a top switch and a bottom switch, connected in series between the first and second lines, a resonant tank preferably formed by a first capacitor and an inductor connected in series between the interconnection line between the top switch and the bottom switch and the second line of the DC bus.

Additionally, the power converter further comprises a controller for switching On (current circulation allowed) and Off (current circulation impeded) the two semiconductor switching devices. The controller is adapted to operate the two semiconductor switching devices in a first mode of operation, in which the active DC-link receives energy from the input converter to store energy in the resonant tank (for example to store current in the inductor), and in a second mode of operation, in which the active DC-link supplies energy stored in the resonant tank (for example to supply current from the inductor) to the output converter when the output converter requires additional power, to fulfil the power demands of the output converter or a load connected to the output of the output converter.

The active DC-link is a power buffer between the input and output converters, formed by electronic switches and few passive components, that behave as a current active filter which supplies a current adapted in amplitude and/or frequency, to the output converter to fulfill its energy requirements for an optimum performance.

The input converter provides a DC output that commonly includes a ripple, which is an alternating component of the DC signal having a positive semi cycle and a negative semi cycle.

The controller is adapted such that in first mode of operation and during the positive semi cycle of the ripple, the active DC-link receives and stores energy, by setting the top switch On, and the bottom switch Off, such that the active DC-link receives energy from the input converter, for example current to charge the inductance. In this situation, the active DC link provides no power to the output converter.

Furthermore, in the first mode of operation and during the negative semi cycle of the ripple, the top switch is Off, and the bottom switch is On, such that the inductance and the first capacitor are connected in parallel, and the inductance discharges to charge the first capacitor. In this situation, the active DC link provides no power to the output converter.

Additionally, the controller is adapted such that in the second mode of operation and during the negative semi cycle of the ripple, the top switch is Off and the bottom switch is On, so that the inductance and the first capacitor are connected in parallel, and the inductance is being charged by the first capacitor. In this situation, the active DC link provides no power to the output converter.

Furthermore, in the second mode of operation and during the positive semi cycle, the top switch is On and the bottom switch is Off, such that the inductance is discharging to supply current to the output converter. In this situation, the active DC link supplies power to the output converter.

In practice, the power converter is electrically connected to an operated system (a load), for example the battery of an electric / hybrid vehicle, or the electric motor of an electric / hybrid vehicle.

When the output converter (or operated system connected to it) demands more power, the controller operates the active DC-link such that the output converter fulfils the power demand of the operated system. However, since the input converter requires some time to increase power output, the active DC-link of the invention in the second mode of operation described above, compensates said delay of the input converter in supplying power, by delivering the energy stored in the inductance of the active DC-link as explained above. The effects achieved by the active DC-link, are two-folded: first the power demanded by the load is supplied, at least partially, without delays, and secondly the alternating signal (ripple) is smoothed, so that the output converter receives a pure or nearly pure DC voltage.

When the output converter (or the operated system (load) connected to it) demands less power than what is being supplied by the input converter, then, the controller operates the active DC-link to store energy as explained above for the first mode of operation.

For the controller, in order to determine whether the operated system demands more or less power, a first control loop is carried out in which the voltage at the DC bus, that is, the voltage between the first and second lines, is measured and compared with a reference voltage.

The reference voltage can be a fixed value or a variable value, for example, it could vary depending on the requirements of the output converter. The comparison between the measured voltage and the reference voltage, makes it possible to determine whether more or less power is being demanded, hence if the voltage measurement is higher than the reference voltage, it means that the operated system is not demanding more power. Conversely, if the voltage measurement is lower than the reference voltage, it means that the operated system is demanding more power, and based on that comparation, the controller would operate top and bottom switches, in the first or in the second mode of operation previously described.

The above-mentioned voltage comparation determines a voltage difference, which in turn can be used to determine a reference current intensity, for example, at the inductor, or at the output of the input converter, or at the input of the output converter. The controller is also adapted to perform a second control loop in which the measured current is compared with the reference current to operate the switches in the first or in the second mode of operation.

Preferably, the active DC-link includes a second capacitor connected between the first and second lines, and downstream the top and bottom switches. This second capacitor stores energy and filters even more the input voltage to the output converter.

Preferably, the controller is adapted to operate each semiconductor switching device by means of Pulse Wide Modulation, PWM, signal. More preferably, the two semiconductor switching devices are implemented as MOSFETs.

In a preferred embodiment of the invention, the input converter is a full bridge converter having an input port adapted to be connected to an AC source, and an output port of the output converter is adapted to be connected to a battery of an electric vehicle.

The output converter may be embodied as a galvanic isolated DC/DC converter. In this case, due to the incorporation of the active DC-Link, the input waveforms of the DC/DC converter can be continuous, which in turn allows that the DC/DC converter to work properly, that is:
- achieve Zero Voltage Switching, ZVS;
- improve efficiency;
- reduce self-heating of components; and
- avoid possible resonances between the AC component and the inductive/capacitive elements of the converter.

The power converter of the invention including the active DC-link, can be used as a power buffer between whatever two power electronics converters. For instance, as a buffer between the 450V-48V DC/DC converter and the 48V-12V DC/DC converter. When two power electronics converters are connected in series, the consumption or supply of power and switching frequencies might not be synchronized. In these circumstances, when the input converter cannot provide the required power, the active DC-link of the invention can supply a complementary power for the output converter.

Another aspect of the invention refers to an on-board charger, OBC, for vehicles incorporating the power converter previously defined. In this use of the invention, the active DC-link is placed after a Power Factor Corrector, PFC, to work with a DC voltage input, so that the output converter can work in an optimum manner.

Another aspect of the invention refers to a method for operating a power converter to supply power to a load. The method comprises the steps of:
generating a DC output signal by means of an input converter, the DC output signal including an alternating component having positive semi cycles and negative semi cycles,
conducting the DC output signal to an output converter by means of a DC bus having a first line and a second line,
wherein the load is connected to an output port of the output converter,
measuring voltage at the DC bus and comparing the measured voltage with a reference voltage, in order to determine the power demand of the load, such that, if the voltage measurement is higher than the reference voltage, then storing energy from the input converter in a resonant tank (formed by a first capacitor and an inductor) connected to the DC bus and during the positive semi cycles of the alternating component, and if the voltage measurement is lower than the reference voltage, then supplying energy previously stored in the resonant tank to the output converter during the positive semi cycles of the alternating component, so that the output converter can fulfill the power demands of the load.

### BRIEF DESCRIPTION OF THE DRAWINGS

To complete the description and in order to provide a better understanding of the invention, a set of drawings is provided. These drawings form an integral part of the description and illustrate embodiments of the invention, which should not be interpreted as restricting the scope of the invention, but just as examples of how the invention can be carried out. The drawings comprise the following figures:
Figure 1.- shows a power converter including a passive DC-link according to the prior art.
Figure 2.- shows a power converter including an active DC-link according to the invention, replacing the passive DC-link.
Figure 3.- shows an electric diagram of an exemplary implementation of a power converter including the active DC-link of the invention.
Figure 4.- shows the power converter of the invention at the second mode of operation to supply power to the output converter (Figure 4 A), and the first mode of operation to store power in the DC link (Figure 4 B). The arrows indicate current circulation.
Figure 5.- shows a schematic representation of the double control loop performed by the controller.
Figure 6.- shows several graphs of the currents and PWM control signals. Two areas of the upper graphs marked as Zoom 1 and Zoom 2, are enlarged in Figures 8 and 9 respectively.
Figure 7.- shows a graph illustrating the deadtime between the PWM control signals.
Figure 8.- shows an enlarged view of the Zoom 1 area of Figure 6. The figure includes the power converter circuit with the status of the two MOSFET's in the areas of the graphs marked by means of broken lines.
Figure 9.- shows an enlarged view of the Zoom 2 area of Figure 6. The figure includes the power converter circuits with the status of the two MOSFET's in the areas of the graphs marked by means of broken lines.

### PREFERRED EMBODIMENTS OF THE INVENTION

**Figure 2** shows a power converter (1) including an active DC-link (2) according to the invention, wherein the power converter (1) comprises an input converter (3) either an AC/DC or a DC/DC converter adapted to provide a DC output, and an output converter (4) either a DC/AC or a DC/DC converter adapted to convert a DC input into an AC or a DC output.

The power converter (1) has a DC bus having a positive and negative lines (L+, L-) connecting the output of the input converter (3) to the input of the output converter (4), for conducting DC current from the input converter (3) to the output converter (4).

The active DC-link (2) is connected to the DC bus lines (L+, L-) and it is formed by: two semiconductor switches, for example embodied as MOSFET's, in particular a top switch (Qtop) and a bottom switch (Qbottom) connected in series between the positive and negative lines (L+, L-). Additionally, the active DC-link (2) has a first capacitor (Cac) and an inductor (L) connected in series between the interconnection between the two switches (Qtop, Qbot) and the negative line (L-) as shown in **Figure 2****.** A second capacitor (Cdc) is connected between the positive and negative lines (L+, L-), and downstream the two switches (Qtop, Qbot).

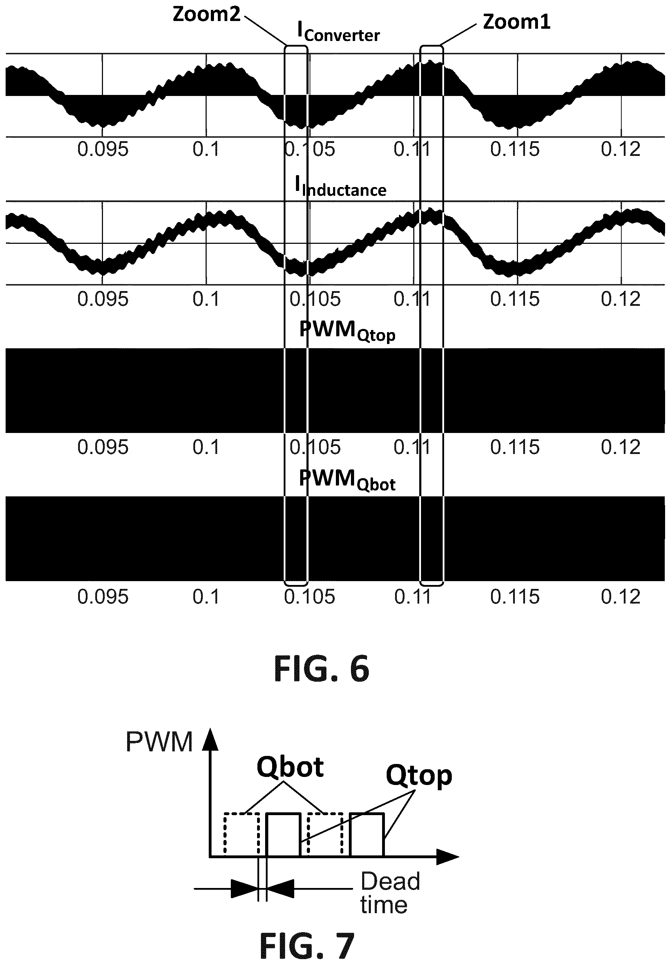

Furthermore, the power converter (1) has a controller (not shown), for example implemented as a microcontroller, for switching On and Off the two switches (Qtop, Qbot), preferably by means of Pulse Wide Modulation, PWM, signals shown in **Figures 6** and **7****.**

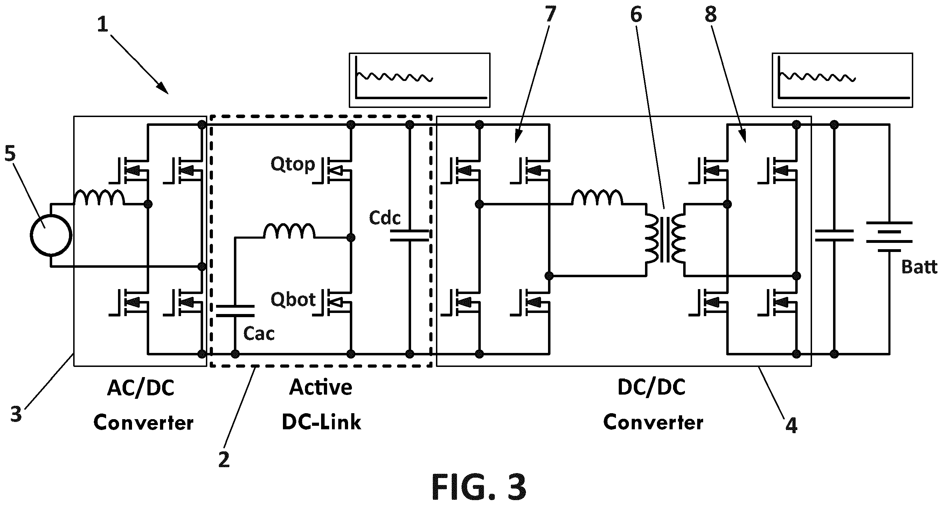

As represented in **Figure 7****,** the PWM, signals for each MOSFET are coordinated to have a deadtime such that the two MOSFETs are never On at the same time, that is, when one MOSFET is On, the other is Off. The dead time is to ensure that no cross conduction can occur, otherwise, if Qtop and Qbot are On at the same time, the DC bus at high voltage would be short circuited. Therefore, during the change, in order to avoid short circuit, between switching positions, first the switch that was in the On position goes Off, and then the switch that was in the Off position goes On, so in the dead time, both switches are in their Off position. In the practical implementation shown in **Figure 3****,** the input converter (3) is a full bridge AC/DC converter having an input port connected to an AC source (5). The output converter (4) is a galvanic isolated DC/DC converter having a transformer (6) and a DC/AC full bridge (7) connected to the primary winding of the transformer (6), and an AC/DC full bridge (8) connected to the secondary winding of the transformer (6). The output of the AC/DC full bridge (8) is connected to a battery (Batt), for example the battery of an electric vehicle, for charging it when necessary. The active DC-link (2) is connected between the input converter (3) and the DC/AC full bridge (7).

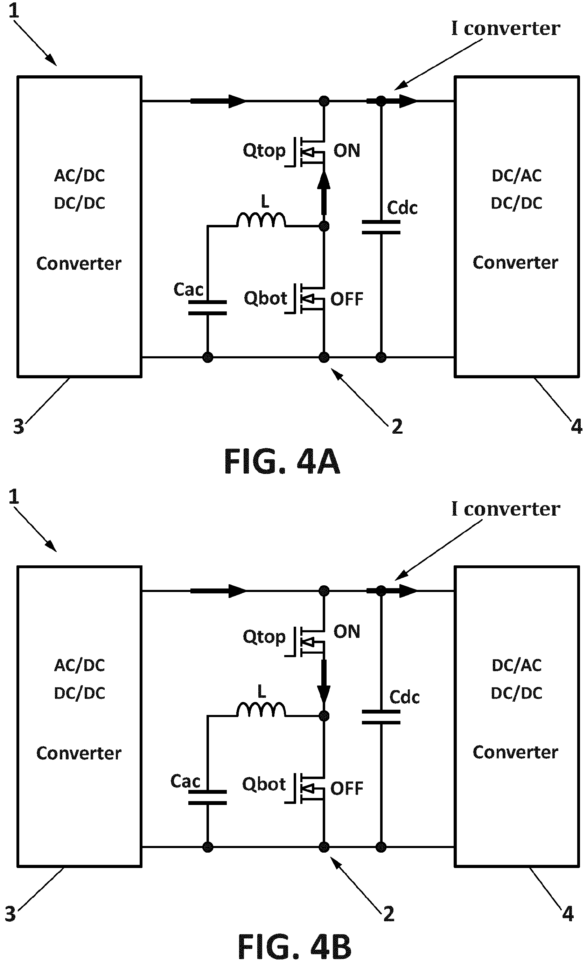

The controller is adapted to operate the two switches (Qtop, Qbot), in a first mode of operation, shown in **Figure 4B****,** in which the active DC-link (2) receives current from the input converter (3) through the DC bus to store current in the inductor (L). Charging of the inductor (L) is carried out when the output converter (4) does not require additional power.

Additionally, the controller is adapted to operate the two switches (Qtop, Qbot) in a second mode of operation shown in **Figure 4A****,** in which the DC link (2) supplies the previously stored current in the inductor (L) to the output converter (4). Therefore, in the second mode of operation the output converter (4), in addition to the power received through the DC bus from the input converter (3), receives power from the active DC link (2), so that the power demands of the output converter (4) for its optimum operation, are fulfilled.

The current (I converter) shown in **Figures 4A** & **4B****,** and **Figures 6****,** **8** and **9****,** is the sum of the current supplied by the input converter (3), and the current supplied by the active DC-link (2), when the active DC-link (2) operates in the second mode of operation.

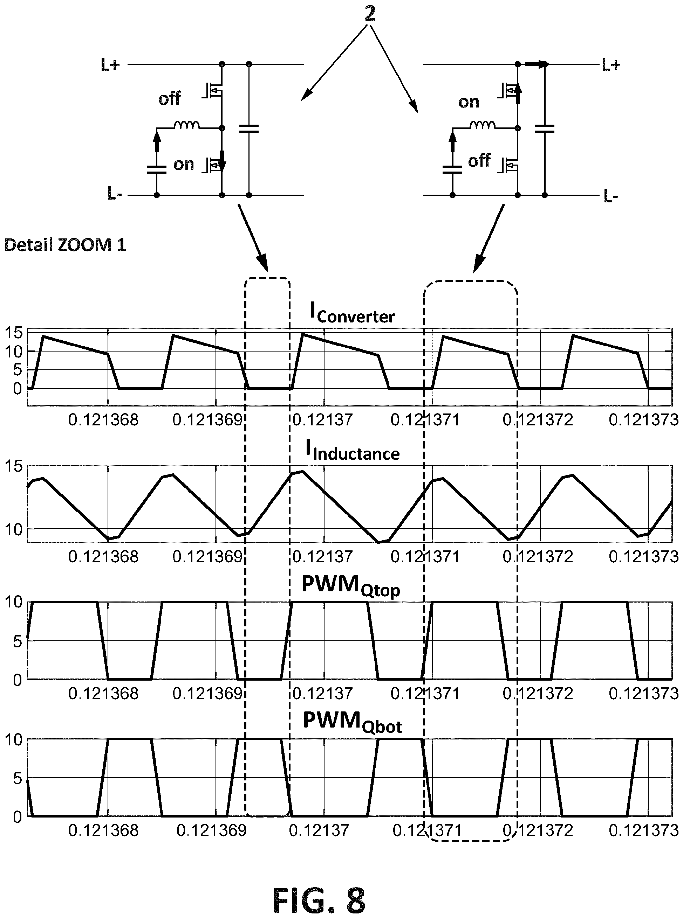

It can be observed in **Figure 6** that the active DC-link (2) is injecting current in the form of a semi-sinusoidal waveform, such that, in the semi-period in which current (I converter) is positive, the DC link (2) is injecting current to the output converter (4), but not all the time as there are moments where the transfer is zero, as shown in **Figure 8****.** In the semi-period where the current is negative, the converter is absorbing current from the input converter, but not all the time as there are moments where the current transfer is zero as shown in **Figure 8****.** The current (I inductance) through the inductance (L) resemblance more closely a sinusoidal shape, than the current (I converter), due to the series connection with the first capacitor (Cac).

**Figure 8** shows an enlarged view of the Zoom 1 area of **Figure 6****,** which corresponds to the second mode of operation, in which the DC link (2) injects current to the output converter (4) through the DC bus lines (L+,L-) as a pulsating signal. During a time period that corresponds to the negative semi cycle of the ripple, (left-hand side circuit in **Figure 8**), the controller by means of a PWM control, sets the top switch (Qtop) OFF and the bottom switch (Qbot) ON so that the first capacitor (Cac) and the inductor (L) are connected in parallel, and the inductance (L) is charged by the first capacitor (Cac). During this time period of the second mode of operation, the current (I converter) is zero, and the current (I inductance) through the inductor (L) is increasing as the inductor (L) is being charged.

During the second mode of operation and during a positive semi cycle of the ripple (right-hand side circuit in **Figure 8**) the controller by means of a PWM control, sets the top switch (Qtop) ON and the bottom switch (Qbot) OFF, so that the current stored in the inductor (L) can be supplied to the output converter (4) through the DC bus lines (L+,L-). During this time period of the second mode of operation, the current (I inductance) through the inductor (L) is decreasing as the inductor (L) discharge current to the output converter (4), and the (I converter) is above zero.

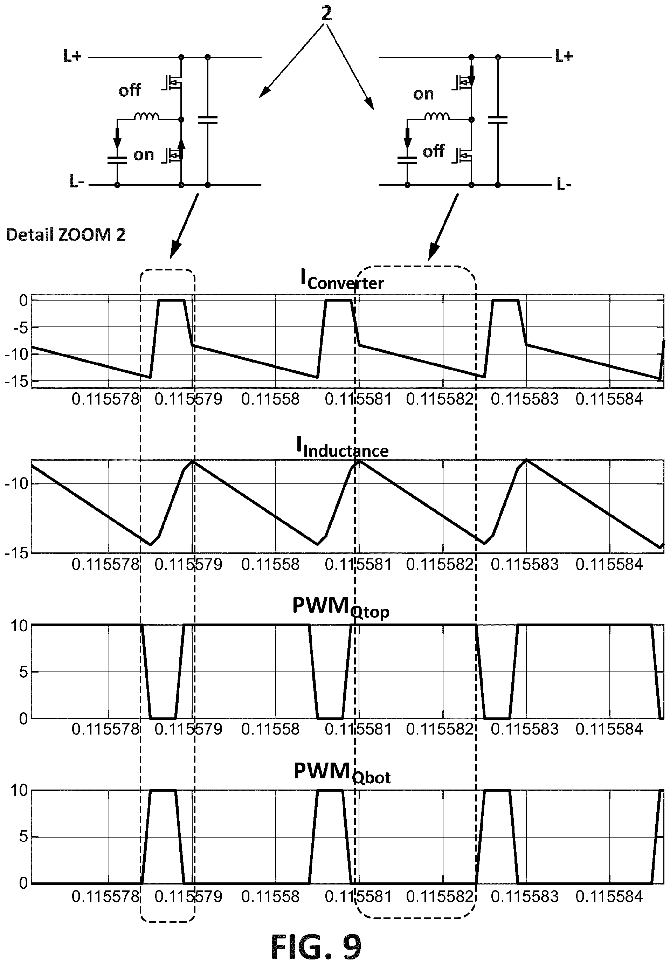

**Figure 9** shows an enlarged view of the Zoom 2 area of **Figure 6****,** which corresponds to the first mode of operation, in which the DC link (2) receives current from the input converter (3) through the DC bus lines (L+,L-). During a time period that corresponds to the positive semi cycle of the ripple (right-hand side circuit in **Figure 9**), the controller sets the top switch (Qtop) ON and the bottom switch (Qbot) OFF, so that current can circulate through the inductor (L) and the first capacitor (Cac) to charge the inductor (L). During this time period of the first mode of operation, the DC link (2) is absorbing power from the DC bus, and current (I inductance) through the inductor (L) is increasing but in negative values, and the (I converter) is also decreasing.

During the first mode of operation and during a negative semi cycle of the ripple (left-hand side circuit in **Figure 9**), the controller by means of a PWM control, sets the top switch (Qtop) OFF and the bottom switch (Qbot) ON, so that the first capacitor (Cac) and the inductor (L) are connected in parallel, and the first capacitor (Cac) can be charged by the inductance (L). During this time period of the first mode of operation, the (I converter) is zero, and the current (I inductance) through the inductor (L) is decreasing to zero as it is being discharged to charge the first capacitor (Cac).

As it can be observed in **Figures 8** and **9****,** during the positive semi cycles of the ripple, both, in the first and second modes of operation, the inductor (L) and the first capacitor (Cac) are connected in series between the positive and the negative lines, to charge the inductor (L) in the first mode of operation, and to discharge the inductor (L) towards the output converter (4) during the second mode of operation, whereas during the negative semi cycle of the ripple both, in the first and second modes of operation, the inductor (L) and the first capacitor (Cac) are connected in parallel between them, and disconnected from the positive and the negative lines.

It should be noted, that **Figures 8** and **9** for the sake of simplicity of the illustrations, do not show a dead time in the PWM control signals for the switches, but practical implementations would include a dead time as previously explained.

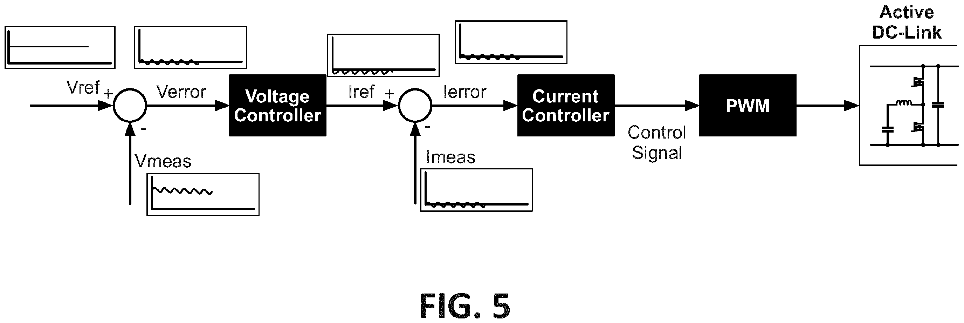

**Figure 5** shows a dual loop control diagram that it can be used to control the active DC-Link. The controller uses as control variable the DC voltage of the DC-Link, for example the voltage at the second capacitor (Cdc). For obtaining that voltage measurement, a voltage meter is connected in parallel with the second capacitor (Cdc), and the controller process the voltage measurements. The aim of the controller is to maintain a certain DC voltage level at the DC capacitor/s, and to achieve this, the active DC link injects or absorbs current to compensate the AC components caused by the output converter (4) current demands, that is, the voltage control is achieved indirectly by current compensation.

More specifically and as represented in **Figure 5****,** the controller is adapted to perform a first control loop wherein a voltage measured in the second capacitor (Cdc) is compared with a reference voltage, such that the operation of the top and bottom semiconductors switching devices are controlled to maintain the energy stored in the second capacitor (Cdc) at a required level. The voltage comparison between the measured voltage and the reference voltage, makes it possible to determine whether more or less power is being demanded, hence if the voltage measurement is higher than the reference voltage, it means that the operated system is not demanding more power. Conversely, if the voltage measurement is lower than the reference voltage, it means that the operated system is demanding more power, and based on that comparation, the controller would operate top and bottom switches, in the first or in the second mode of operation previously described.

The above-mentioned voltage comparation determines a voltage difference, which in turn can be used to determine a reference current intensity, for example, at the inductor, or at the output of the input converter, or at the input of the output converter. The controller is also adapted to perform a second control loop in which the measured current is compared with the reference current to operate the switches alternatively in the first mode or in the second mode of operation as required by the operating system (the load).

## Claims

1. Power converter system (1) comprising:
an input converter (3) adapted to provide an output signal which includes a DC output signal, an output converter (4) adapted to convert a DC input signal into an AC or a DC output signal, a DC bus having a first line and a second line (L+, L-) connecting the output signal of the input converter (3) to the input signal of the output converter (4),
**characterized in that** the power converter system (1) further comprises:
an active DC-link (2) that includes two semiconductor switching devices (Qtop, Qbot) connected in series between the first and second lines (L+, L-),
a resonant tank including a first capacitor (Cac) and an inductor (L), connected in series between the interconnection between the two semiconductor switching devices (Qtop, Qbot) and the second line (L-), and
a controller for switching the status of the two semiconductor switching devices (Qtop, Qbot), wherein the controller is adapted to operate the two semiconductor switching devices (Qtop, Qbot) in a first mode of operation, in which the active DC-link (2) receives energy from the input converter (3) to store energy in the resonant tank, and in a second mode of operation, in which the active DC-link (2) supplies energy stored in the resonant tank to the output converter (4).

2. Power converter system (1) according to claim 1, wherein the controller is adapted to alternatively switch an ON and OFF the two semiconductor switching devices (Qtop, Qbot), and to determine the power demand of the output converter (4) or the power demand of a load connected to the output of the output converter (4), and based on whether said power demand, operate the active DC-link (2) in the first mode of operation or in the second mode of operation, to store energy in the resonant tank or to supply energy to the output converter (4).

3. Power converter system (1) according to claim 2, wherein the controller is adapted to compare a measured voltage at the output of the active DC-link (2), with a predefined reference voltage so as to determine a voltage difference, and wherein the controller is further adapted to determine the power demand of the output converter (4) based on the voltage difference.

4. Power converter system (1) according to claim 3, wherein the controller is further adapted to calculate a reference current intensity at the inductor (L) based on the voltage difference, and to compare a current measured at the inductor (L) with the reference current intensity at the inductor (L), and wherein the controller is further adapted to generate a control signal for switching ON and OFF the two semiconductor switching devices (Qtop, Qbot).

5. Power converter system (1) according to claim 4, wherein the control signal is a Pulse Wide Modulation, PWM, signal.

6. Power converter according to any of the preceding claims, wherein the controller is adapted such that in a first mode of operation and during a positive semi cycle of a ripple of the DC output signal generated by the input converter (3), to set the top switch ON and to set the bottom switch OFF, such that the active DC-link (2) receives current from the input converter to charge the inductance (L).

7. Power converter according to claim 5, wherein the controller is adapted such that in a first mode of operation and during a negative semi cycle of a ripple of the DC output signal generated by the input converter (3), to set the top switch is OFF and to set the bottom switch is ON, such that the inductance (L) and the first capacitor (Cac) are connected in parallel, so that the inductance (L) can charge the first capacitor (Cac).

8. Power converter according to any of the preceding claims, wherein the controller is adapted such that in the second mode of operation and during a negative semi cycle of a ripple of the DC output signal generated by the input converter (3), to set the top switch OFF and the bottom switch ON, so that the inductance (L) and the first capacitor (Cac) are connected in parallel, and the inductance (L) can be charged by the first capacitor (Cac).

9. Power converter according to any claim 8, wherein the controller is adapted such that in the second mode of operation and during a positive semi cycle of a ripple of the DC output signal generated by the input converter (3), to set the top switch ON and to set the bottom switch OFF, such that the inductance (L) can discharge to supply current to the output converter (4).

10. Power converter system (1) according to any of the preceding claims, wherein the active DC-link (2) includes a second capacitor (Cdc) connected between the first and second lines (L+, L-), and downstream the top and bottom semiconductor switching devices (Qtop, Qbot), and wherein the first line (L+) is a positive line and the second line (L-) is a negative line.

11. Power converter system (1) according to claims 5 to 10, wherein the two semiconductor switching devices (Qtop, Qbot) are MOSFETs, and wherein the PWM signals for each MOSFET are coordinated to have a deadtime such that the two MOSFETs are never ON at the same time.

12. Power converter system (1) according to any of the preceding claims, wherein the input converter (3) is adapted to convert and AC or a DC input into a DC output.

13. Power converter system (1) according to any of the preceding claims, wherein an output port of the output converter (4) is adapted to be connected to an operated system or to a load, which preferably comprises a battery of an electric vehicle.

14. On-board battery charger, OBC, for vehicles incorporating the power converter (1) defined in any of the preceding claims.

15. Method for operating a power converter (1) to supply power to a load,
the method comprising the steps of:
generating a DC output signal by means of an input converter (3), the DC output signal including an alternating component having positive semi cycles and negative semi cycles,
conducting the DC output signal to an output converter (4) by means of a DC bus having a first line and a second line (L+, L-),
wherein the load is connected to an output port of the output converter (4),
measuring voltage at the DC bus and comparing the measured voltage with a reference voltage, in order to determine the power demand of the load, such that, if the voltage measurement is higher than the reference voltage, then storing energy from the input converter in a resonant tank connected to the DC bus and during the positive semi cycles of the alternating component, and if the voltage measurement is lower than the reference voltage, then supplying energy previously stored in the resonant tank to the output converter (4) during the positive semi cycles of the alternating component, so that the output converter can fulfill the power demands of the load.
